# FASCICULE DE BREVET EUROPEEN

(11) **EP 1 285 220 B1**
(45) Date de publication et mention de la délivrance du brevet: **13.12.2006**
(21) Numéro de dépôt: 01934084.3
(22) Date de dépôt: 11.05.2001
(51) Int. Cl.: G01B 7/14, G01D 5/20

(54) **CAPTEURS EN ETOILE**
STERNSCHALTUNG MIT SENSOREN
STAR-CONNECTED SENSOR

(30) Priorité: 15.05.2000 FR 0006140
(43) Date de publication de la demande: 26.02.2003
(73) Titulaire: ALCATEL, 75008 Paris (FR)
(72) Inventeur: REVERDY, François, 74370 Saint Martin Bellevue (FR)
(74) Mandataire: Lamoureux, Bernard
(86) Numéro de dépôt international: PCT/FR2001/001420
(87) Numéro de publication internationale: WO 2001/088466

(56) Documents cités:
- CH-A- 251 155
- US-A- 4 199 718
- PATENT ABSTRACTS OF JAPAN vol. 1996, no. 01, 31 janvier 1996 (1996-01-31) & JP 07 238928 A (TOSHIBA CORP), 12 septembre 1995 (1995-09-12)

## Description

### DOMAINE TECHNIQUE DE L'INVENTION

La présente invention concerne les ensembles rotatifs comprenant un rotor monté en rotation dans un stator autour d'un axe de rotation moyen, dans lesquels on a besoin de détecter la position radiale du rotor dans le stator.

La détection de position radiale du rotor permet par exemple de détecter l'usure des paliers portant le rotor, comme décrit dans le document US 4,199,718 A. Dans ce document, le détecteur de position radiale du rotor comprend trois capteurs répartis dans le stator sensiblement à 120° les uns des autres autour du rotor et à égale distance de l'axe de rotation moyen du rotor. Chaque capteur est une bobine qui produit à ses bornes une tension électrique fonction d'un champ magnétique généré par une pluralité de pôles magnétiques portés par le rotor. Les bobines sont connectées en série, pour générer un signal de tension périodique dont le traitement permet d'évaluer la position radiale du rotor dans le stator. Cette structure nécessite de prévoir un tronçon de rotor multipôles générant le champ magnétique capté par les bobines. Adapté pour le contrôle d'usure de paliers mécaniques, ce dispositif ne serait pas applicable à la commande de paliers magnétiques, dans lesquels les électroaimants de sustentation génèrent un champ magnétique susceptible de perturber le fonctionnement des capteurs.

Le document CH 251 155 A décrit un dispositif de contrôle de concentricité d'un fil dans son enrobage. Un circuit magnétique à trois branches radiales en étoile reliées par une couronne périphérique porte trois bobinages connectés en une étoile à point de connexion commun. Les bobinages sont alimentés par une source de tension triphasée à neutre. Un capteur de tension, connecté entre le neutre et le point de connexion commun, fournit un signal proportionnel à l'amplitude de l'excentricité du fil. Le dispositif ne mesure pas, et ne permettrait pas de mesurer, la position radiale instantanée d'un arbre rotatif.

Pour la commande d'un palier magnétique, on connaît par exemple un détecteur de position radiale de rotor tel que décrit dans le document US 4,114,960 A, comprenant au moins deux paires de capteurs inductifs. Les capteurs d'une paire de capteurs sont placés en positions diamétralement opposées par rapport au rotor, et sont connectés électriquement en série pour être alimentés par une tension sinusoïdale. La borne de sortie du capteur est connectée au point de raccordement des capteurs, et produit un signal électrique image du déplacement du rotor dans la direction du diamètre reliant les deux capteurs. La détection de position radiale du rotor dans toutes les orientations autour de l'axe de rotation moyen nécessite au moins deux paires de capteurs, orientées par exemple selon deux diamètres perpendiculaires.

### EXPOSE DE L'INVENTION

Le problème proposé par l'invention est de concevoir une nouvelle structure de détecteur de position radiale du rotor dans le stator, au moyen d'un nombre de capteurs réduit et avec des capteurs peu sensibles aux inductions magnétiques environnantes.

L'idée qui est à la base de l'invention est d'utiliser trois capteurs inductifs, connectés et alimentés de façon appropriée, pour réduire le nombre de capteurs, réduire le câblage nécessaire pour leur connexion, réduire les liaisons et la connectique nécessaires, et limiter les pièces mécaniques nécessaires pour le maintien mécanique des capteurs dans le stator.

Un autre objet de l'invention est de faciliter le traitement du signal de sortie permettant l'évaluation de la position radiale du rotor, et permettant son utilisation ultérieure par exemple pour la commande des électroaimants de sustentation dans des paliers magnétiques assurant le maintien centré du rotor.

Pour atteindre ces objets ainsi que d'autres, l'invention prévoit un ensemble rotatif, comprenant un rotor monté en rotation dans un stator autour d'un axe de rotation moyen, et comprenant un détecteur de position radiale du rotor dans le stator comportant trois capteurs répartis dans le stator sensiblement à 120° les uns des autres autour du rotor et à égale distance de l'axe de rotation moyen ; selon l'invention :
- les capteurs sont des capteurs inductifs placés en regard d'un tronçon de rotor en matériau magnétique,
- une source de tension sinusoïdale triphasée équilibrée à point neutre alimente les capteurs inductifs câblés en étoile,
- des moyens permettent de capter la tension de sortie entre le point neutre de la source de tension triphasée équilibrée et le point de connexion commun des capteurs inductifs câblés en étoile, et d'en déduire la position radiale du rotor dans le stator.

L'invention peut trouver application dans les systèmes de commande de palier magnétique. Dans ce cas, l'ensemble rotatif comprend au moins un palier magnétique dont les électroaimants de sustentation sont alimentés par un circuit de commande piloté par la tension de sortie du détecteur de position radiale correspondant.

Dans cette application, une solution particulièrement avantageuse consiste à utiliser un palier magnétique comprenant trois électroaimants de sustentation, répartis autour du rotor selon trois axes à 120° les uns des autres.

Dans ce cas, les capteurs inductifs peuvent avantageusement être décalés angulairement entre les positions angulaires occupées par les électroaimants de sustentation.

Par le fait que les capteurs inductifs sont au nombre de trois, dans le cas d'un palier magnétique à trois électroaimants de sustentation, il devient possible d'engager les capteurs inductifs entre les électroaimants de sustentation d'un même palier magnétique, de sorte que l'ensemble tient une place axiale réduite.

Pour un rotor, on prévoira de préférence deux paliers magnétiques espacés longitudinalement l'un de l'autre.

Selon un premier mode de réalisation, la tension de sortie est traitée par des moyens de traitement de signal pour produire un signal d'amplitude et un signal de phase par rapport à la tension délivrée par la source de tension triphasée équilibrée, le signal d'amplitude constituant un signal image de l'amplitude de déplacement radial de l'axe de gravité du rotor par rapport à l'axe de rotation moyen, le signal de phase constituant un signal image de la position angulaire de l'axe de gravité du rotor autour de l'axe de rotation moyen par rapport aux capteurs inductifs. On obtient ainsi, à partir de seulement trois capteurs, deux signaux constituant l'image de l'amplitude et de la position angulaire du déplacement radial de l'axe de gravité du rotor dans le stator.

Selon une réalisation préférée de ce premier mode de réalisation, les moyens de traitement de signal comprennent :
- un circuit de mesure d'amplitude, connecté à la sortie du détecteur de position radiale et produisant un signal d'amplitude proportionnel à l'amplitude de la tension de sortie du détecteur de position radiale,
- un circuit de mesure de phase, connecté à la sortie du détecteur de position radiale, et produisant un signal de phase proportionnel au déphasage entre la tension de sortie et l'une des trois tensions sinusoïdales alimentant les capteurs inductifs en étoile,
- des moyens de traitement numérique, recevant le signal d'amplitude et le signal de phase, et produisant les signaux de commande d'alimentation des électroaimants de sustentation visant au maintien centré de l'axe de gravité du rotor par rapport à l'axe de rotation moyen dans le stator.

Selon un second mode de réalisation, la tension de sortie est traitée par des moyens de traitement de signal produisant au moins deux signaux d'amplitude constituant respectivement les images des composantes de déplacement instantané du centre de gravité du rotor selon deux directions radiales fixes distinctes du stator autour de l'axe de rotation moyen.

Dans une réalisation préférée de ce second mode de réalisation, les moyens de traitement de signal comprennent :
- un premier circuit de mesure d'amplitude dont une première entrée est connectée à la sortie du détecteur de position radiale et dont une seconde entrée est connectée à une première phase de la source de tension sinusoïdale triphasée équilibrée, et produisant sur sa sortie un premier signal d'amplitude proportionnel à la valeur moyenne de la tension de sortie calculée pendant un échantillon synchrone avec ladite première phase de source de tension sinusoïdale triphasée équilibrée,
- un second circuit de mesure d'amplitude dont une première entrée est connectée à la sortie du détecteur de position radiale et dont une seconde entrée est connectée à une autre phase de la source de tension sinusoïdale triphasée équilibrée, par exemple la troisième phase, et produisant sur sa sortie un second signal d'amplitude proportionnel à la valeur moyenne de la tension de sortie calculée pendant un échantillon synchrone avec ladite troisième phase de source de tension sinusoïdale triphasée équilibrée,
- des moyens de traitement numérique recevant les deux signaux d'amplitude et produisant les signaux de commande d'alimentation des électroaimants de sustentation visant au maintien centré de l'axe de gravité du rotor par rapport à l'axe de rotation moyen dans le stator.

L'invention trouve une application particulièrement avantageuse dans la constitution d'un rotor et d'un stator d'une pompe à vide.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles:
- la figure 1 est une coupe longitudinale d'un ensemble rotatif à rotor tenu dans un stator par des paliers magnétiques, constituant une pompe à vide ;
- la figure 2 illustre schématiquement la répartition des capteurs autour d'un rotor, dans un détecteur de position radiale selon l'invention ;
- la figure 3 est une vue en perspective d'un capteur inductif pouvant être utilisé dans un détecteur de position radiale selon la présente invention ;
- la figure 4 est une coupe longitudinale du capteur inductif de la figure 3 ;
- la figure 5 illustre schématiquement un circuit électrique selon un premier mode de réalisation de l'invention, pour la constitution d'un détecteur de position radiale ;
- la figure 6 illustre la forme d'onde de la tension sinusoïdale triphasée d'alimentation des capteurs ;
- la figure 7 illustre les tensions d'entrée et de sortie du circuit de mesure d'amplitude dans le circuit de la figure 5 ;
- la figure 8 illustre les formes d'onde des tensions à l'entrée du circuit de mesure de phase dans le circuit de la figure 5, illustrant le déphasage à mesurer ;
- la figure 9 illustre schématiquement un circuit électrique selon un second mode de réalisation de l'invention, pour la constitution d'un détecteur de position radiale ; et
- la figure 10 est un diagramme temporel illustrant les formes d'onde respectives des signaux permettant le calcul de position dans le circuit de la figure 9.

### DESCRIPTION DES MODES DE REALISATION PREFERES

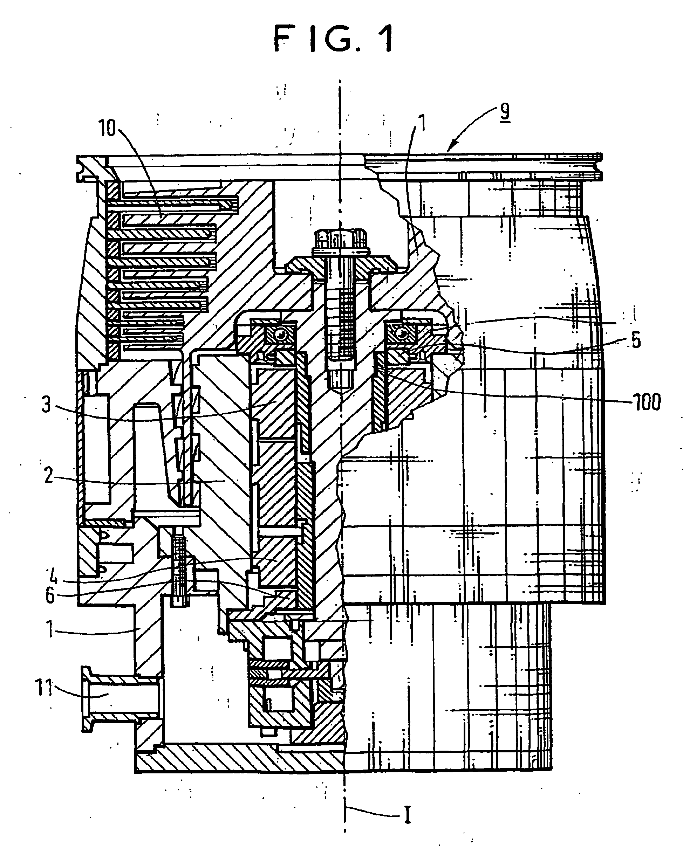

La figure 1 illustre une application de la présente invention à la réalisation d'une pompe à vide, comprenant un rotor 1 monté en rotation dans un stator 2 autour d'un axe de rotation moyen I-I. Le rotor 1 est tenu en position centrée selon l'axe de rotation moyen I-I par des paliers magnétiques 3 et 4, espacés longitudinalement l'un de l'autre, et comprenant chacun des électroaimants de sustentation alimentés par un circuit de commande piloté par la tension de sortie d'un détecteur de position radiale respectif 5 ou 6.

Chaque détecteur de position radiale 5 ou 6 a pour fonction de détecter le déplacement radial du rotor 1 à l'écart de l'axe de rotation moyen I-I, pour commander l'alimentation des électroaimants du palier magnétique correspondant 3 ou 4 en générant des forces magnétiques qui tendent à s'opposer à ce déplacement radial du rotor 1 et à le ramener ainsi en position centrée selon l'axe de rotation moyen I-I.

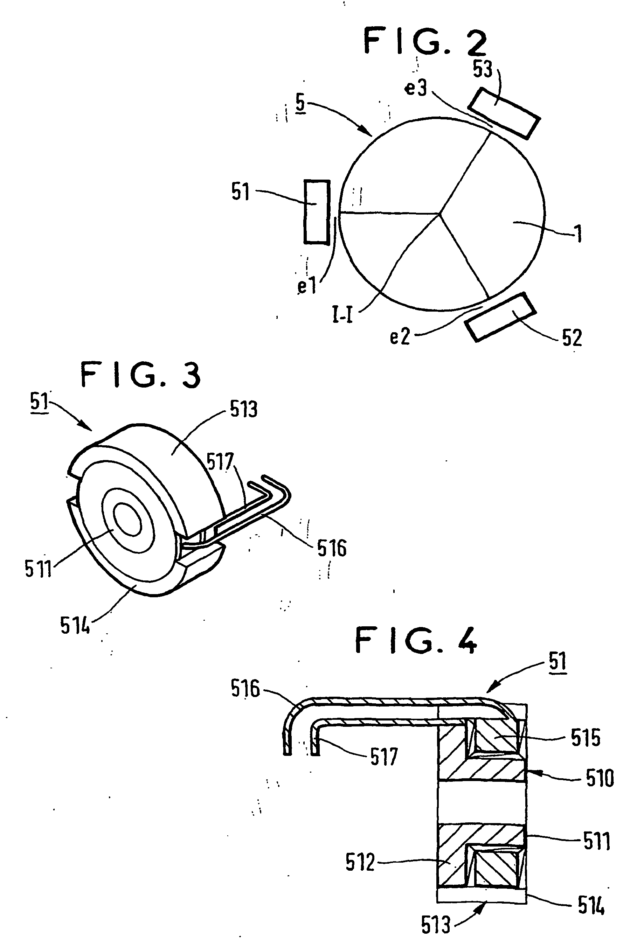

Comme illustré sur la figure 2, un détecteur de position radiale tel que le détecteur 5 selon l'invention comprend trois capteurs inductifs 51, 52 et 53, placés dans le stator 2 sensiblement à 120° les uns des autres autour du rotor 1 et à égale distance de l'axe de rotation moyen I-I. Les capteurs 51, 52 et 53 sont des capteurs inductifs, pour coopérer avec un tronçon 100 (figure 1) de rotor 1 en matériau magnétique en regard duquel ils sont placés.

Chaque capteur inductif peut être de type connu, comprenant un circuit magnétique fermement fixé au stator 2, par exemple un circuit magnétique en U en ferrite, portant un bobinage, et coopérant avec le tronçon de rotor 1 en matériau magnétique qui ferme le circuit magnétique en laissant un entrefer radial e1, e2 ou e3 faible entre le circuit magnétique en U porté par le stator et le tronçon 100 de rotor en matériau magnétique.

Les variations dans la valeur de l'entrefer, qui résultent d'éventuels mouvements radiaux du rotor 1, modifient les caractéristiques magnétiques du circuit magnétique, et en conséquence modifient l'autoinductance du bobinage enroulé autour du circuit magnétique en U.

Les figures 3 et 4 illustrent une forme possible de capteur inductif 51 que l'on peut utiliser selon l'invention : le capteur inductif 51 a une forme générale cylindrique, dans laquelle on distingue le circuit magnétique formé d'un noyau magnétique axial central 510 dont une première extrémité forme un premier pôle 511 et dont l'autre extrémité est reliée par un flasque radial 512 à une armature magnétique périphérique 513 cylindrique dont le bord libre forme le second pôle 514. Une bobine d'induction annulaire 515 est engagée dans l'espace annulaire entre le noyau magnétique axial central 510 et l'armature magnétique périphérique 513. On distingue également les conducteurs de sortie 516 et 517 de la bobine d'induction annulaire 515, permettant la connexion électrique.

En fonctionnement, le tronçon de rotor en matériau magnétique est en regard de la face comportant les pôles 511 et 514 du capteur inductif 51, et tend à refermer ainsi le circuit magnétique autour de la bobine d'induction annulaire 515.

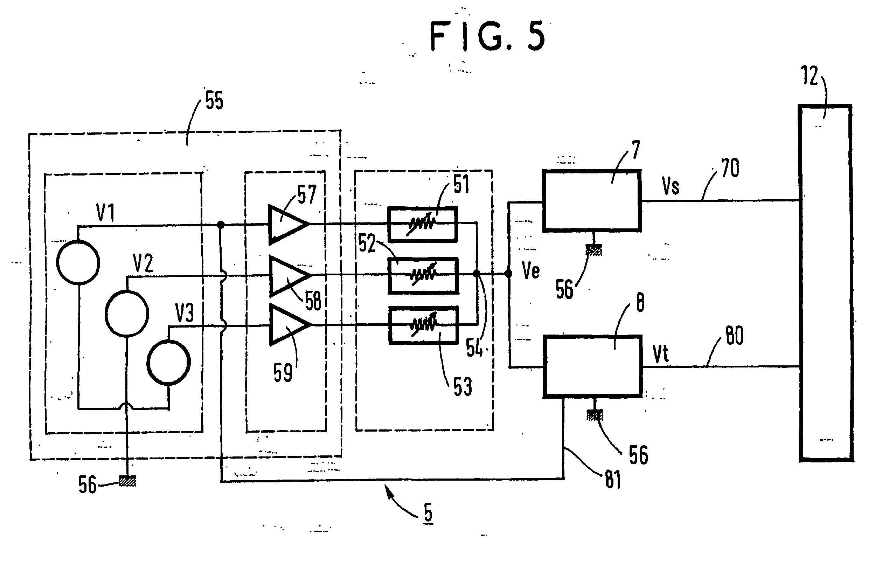

On considère la figure 2. L'impédance d'un capteur inductif 51, 52 ou 53 est inversement proportionnelle à l'entrefer respectif e1, e2 ou e3 qui le sépare du rotor 1. Lorsque le rotor 1 est centré radialement dans le stator 2, les entrefers e1, e2 et e3 sont identiques. Les impédances des trois capteurs inductifs 51, 52 et 53 sont alors égales. Dans ce cas, le système en étoile des capteurs inductifs 51, 52 et 53 est équilibré, de sorte que le potentiel du point de connexion 54 commun (figure 5) des capteurs est égal au potentiel du neutre 56 de la source de tension sinusoïdale triphasée équilibrée 55. Autrement dit, la tension de sortie Ve est nulle.

Lorsqu'il y a déplacement du rotor 1, les entrefers e1, e2 et e3 séparant le rotor 1 du stator 2 sont différents. Les impédances des trois capteurs inductifs 51, 52 et 53 ne sont plus égales, et le système étoile des capteurs est déséquilibré.

Il en résulte, au point de connexion 54 commun des capteurs, une tension non nulle dont l'amplitude est proportionnelle au déplacement radial et la phase proportionnelle au déplacement angulaire défini dans un repère de référence.

En se référant maintenant à la figure 5, illustrant un premier mode de réalisation du circuit électrique selon l'invention, on retrouve les capteurs inductifs 51, 52 et 53, câblés électriquement en étoile avec un point de connexion 54 commun, et alimentés par une source de tension sinusoïdale triphasée équilibrée 55 à point neutre 56. La source de tension sinusoïdale triphasée équilibrée 55 est illustrée sur la figure par trois générateurs dont une borne est reliée au point neutre 56 commun et dont l'autre borne fournit une tension respective V1, V2 et V3 envoyée à une borne correspondante de l'un des capteurs inductifs respectifs 51, 52 et 53 par l'intermédiaire d'un amplificateur 57, 58 ou 59 respectivement.

Le point de connexion 54 commun des capteurs inductifs 51, 52 et 53 et le neutre 56 de la source de tension sinusoïdale triphasée équilibrée 55 constituent les deux bornes de sortie du détecteur de position radiale 5 selon l'invention.

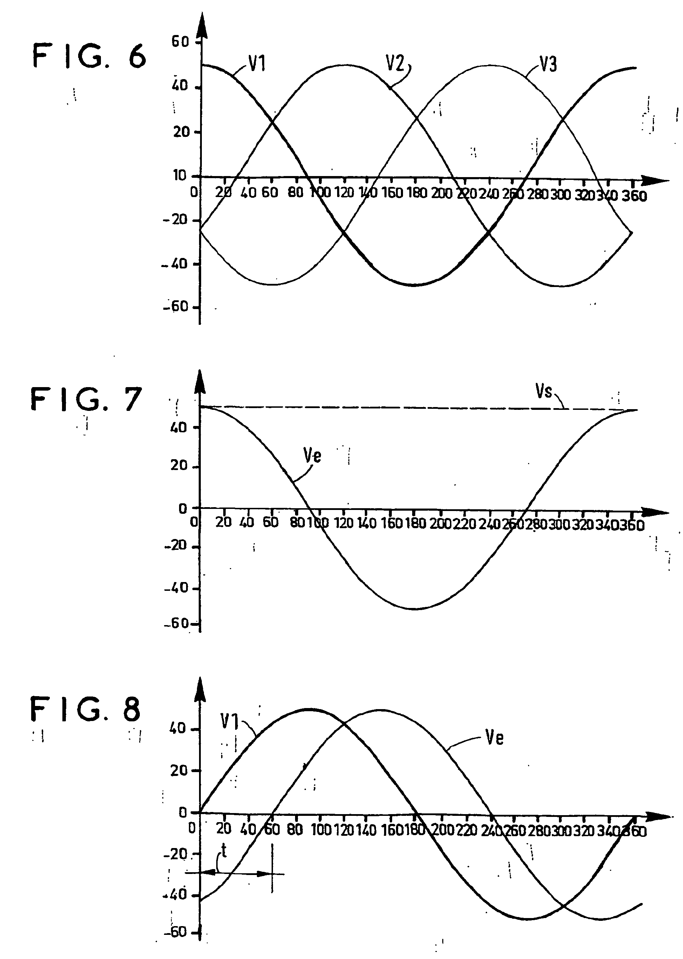

La figure 6 illustre la forme d'onde des trois tensions V1, V2 et V3 délivrées par la source de tension sinusoïdale triphasée équilibrée 55.

La tension de sortie Ve prélevée entre le point de connexion 54 commun et le neutre 56 est traitée par des moyens de traitement de signal déterminant son amplitude et sa phase par rapport à la tension délivrée par la source de tension sinusoïdale triphasée équilibrée 55.

Dans le premier mode de réalisation illustré sur la figure 5, les moyens de traitement de signal comprennent un circuit de mesure d'amplitude 7 et un circuit de mesure de phase 8.

Le circuit de mesure d'amplitude 7 est connecté à la sortie 54, 56 du détecteur de position radiale 5 et produit sur sa sortie 70 un signal d'amplitude Vs image de l'amplitude de la tension de sortie Ve du détecteur de position radiale 5. La figure 7 illustre la forme d'onde de la tension de sortie Ve du détecteur de position radiale 5 selon l'invention, dans le cas d'un déséquilibre de l'impédance des capteurs inductifs 51, 52 et 53 résultant d'un décentrage du rotor 1 : la tension de sortie Ve est sinusoïdale, à la fréquence des tensions V1, V2 et V3 de la source de tension sinusoïdale triphasée équilibrée 55. Le circuit de mesure d'amplitude 7 produit, sur sa borne de sortie 70, un signal d'amplitude Vs continu proportionnel à l'amplitude de la tension de sortie Ve sinusoïdale.

Le circuit de mesure de phase 8 comporte une première entrée connectée à la sortie 54, 56 du détecteur de position radiale 5, et comporte une entrée supplémentaire 81 connectée à l'une des tensions V1, V2 ou V3 de la source de tension sinusoïdale triphasée équilibrée 55, par exemple à la tension V1, pour constituer une référence de phase. Comme on le voit sur la figure 8, le circuit de mesure de phase 8 reçoit ainsi la tension V1 sinusoïdale et la tension de sortie Ve, qui sont deux tensions sinusoïdales de même fréquence et présentant un déphasage t qui est l'image du décalage angulaire autour de l'axe de rotation moyen I-I entre le premier capteur inductif 51 et la direction de déplacement radial mesurée du rotor 1. Le circuit de mesure de phase 8 produit sur sa sortie 80 un signal de phase Vt qui est l'image du déphasage t ainsi déterminé.

Ainsi, le signal d'amplitude Vs constitue un signal image de l'amplitude de déplacement radial de l'axe de gravité du rotor 1 par rapport à l'axe de rotation moyen I-I. Le signal de phase Vt sur la borne de sortie 80 constitue un signal image de la position angulaire de l'axe de gravité du rotor 1 autour de l'axe de rotation moyen I-I par rapport aux capteurs inductifs 51, 52 et 53 dans le stator 2.

Des moyens de traitement numériques 12 reçoivent le signal d'amplitude Vs et le signal de phase Vt, et produisent les signaux de commande d'alimentation des électroaimants de sustentation visant au maintien centré de l'axe de gravité du rotor 1 par rapport à l'axe de rotation moyen I-I dans le stator 2.

On comprend que, pour obtenir une bonne précision de la détection de position radiale du rotor 1 dans le stator 2, la fréquence F de la source de tension sinusoïdale triphasée équilibrée 55 doit être très supérieure à la fréquence de rotation du rotor 1 dans le stator 2. Lors des oscillations éventuelles du rotor 1 dans le stator 2, la tension de sortie Ve est modulée en amplitude et en phase, et le circuit de mesure d'amplitude 7 est capable de suivre les variations d'amplitude de la tension de sortie Ve, tandis que le circuit de mesure de phase 8 est capable de suivre les variations de phase de la position angulaire du rotor 1, à la vitesse de rotation du rotor 1.

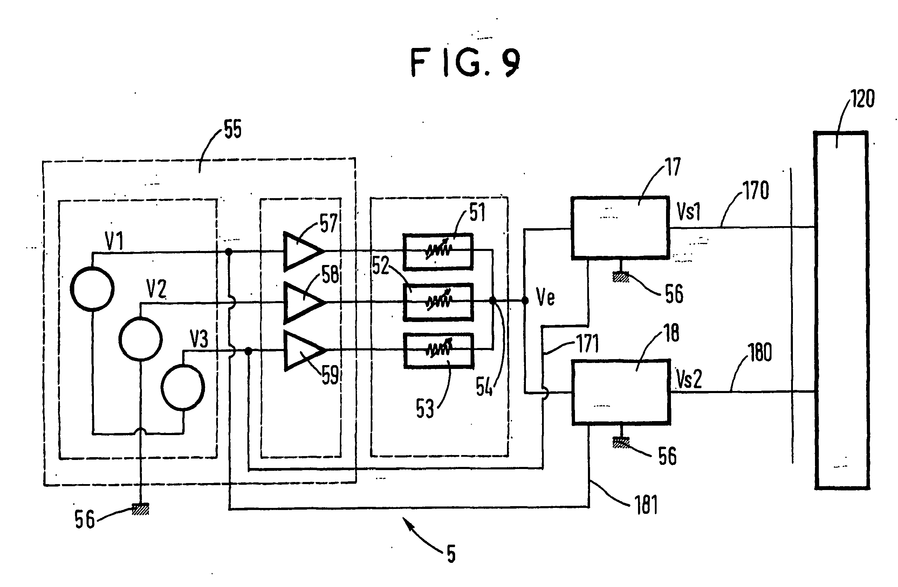

On se référera maintenant à la figure 9, illustrant un second mode de réalisation du circuit électrique selon l'invention.

Dans ce second mode de réalisation, on retrouve la même structure de détecteur de position radiale 5, déjà décrite dans le mode de réalisation précédent, et les mêmes éléments sont repérés par les mêmes références numériques : les trois tensions V1, V2, V3 de la source de tension sinusoïdale triphasée équilibrée 55 avec un neutre 56, les trois capteurs inductifs 51, 52 et 53 et les trois amplificateurs 57, 58 et 59, et la sortie 54 du détecteur de position radiale.

La différence est que les moyens de traitement de signal utilisent le principe du redressement synchrone, permettant d'obtenir une meilleure sensibilité dans l'évaluation du déphasage et de l'amplitude de déplacement radial du rotor. Cette meilleure sensibilité présente l'intérêt de permettre une plus grande précision de maintien du rotor 1 au voisinage immédiat de sa position centrée théorique le long de l'axe de rotation moyen I-I dans le stator 2.

Dans ce mode de réalisation, les moyens de traitement de signal comprennent un premier circuit de mesure d'amplitude 17 dont une première entrée est connectée à la sortie 54, 56 du détecteur de position radiale 5, et dont une seconde entrée 171 est connectée à une première phase V1 de la source de tension sinusoïdale triphasée équilibrée 55. Le premier circuit de mesure d'amplitude 17 produit sur sa sortie 170 un premier signal d'amplitude Vs1 proportionnel à la valeur moyenne de la tension de sortie Ve calculée pendant un échantillon synchrone avec ladite première phase V1 de source de tension sinusoïdale triphasée équilibrée 55.

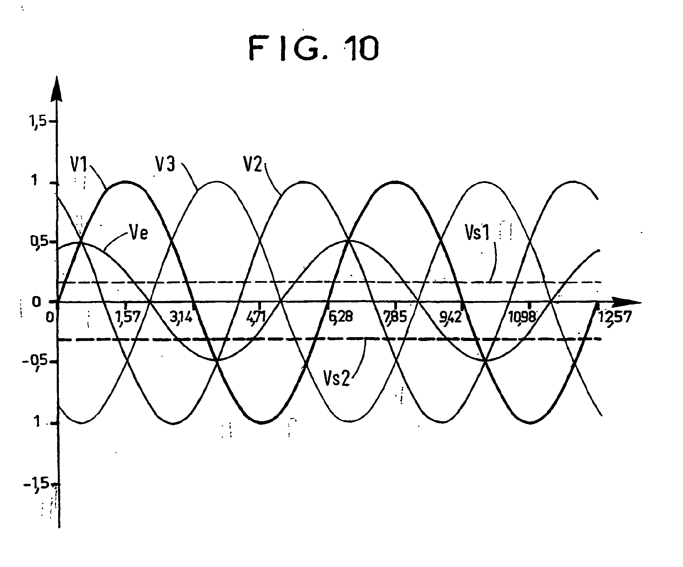

Pour comprendre ce fonctionnement, on peut par exemple se référer à la figure 10, qui illustre les formes d'onde respectives des trois phases V1, V2 et V3 de la tension sinusoïdale triphasée équilibrée 55, et de la tension de sortie Ve du détecteur de position radiale 5. Les formes d'onde sont sinusoïdales, et la tension de sortie Ve est déphasée par rapport aux tensions V1, V2 et V3 selon un déphasage qui dépend de la position angulaire du centre de gravité du rotor par rapport au stator. Sur la figure 10, on a illustré la tension de sortie Ve dans un exemple correspondant à une tension crête de 0,5 Volts et un déphasage de 60° par rapport à la tension V1, c'est-à-dire par rapport à la position du capteur 51.

Par exemple, le premier signal d'amplitude Vs1 peut être calculé en considérant la valeur moyenne de la tension Ve pendant l'alternance positive de la tension V1 de première phase.

De manière similaire, les moyens de traitement de signal comprennent un second circuit de mesure d'amplitude 18 dont une première entrée est connectée à la sortie 54, 56 du détecteur de position radiale 5 et dont une seconde entrée 181 est connectée à une autre phase de la source de tension sinusoïdale triphasée équilibrée 55, par exemple la troisième phase V3. Le second circuit de mesure d'amplitude 18 produit sur sa sortie 180 un second signal d'amplitude Vs2 proportionnel à la valeur moyenne de la tension de sortie Ve calculée pendant un échantillon synchrone avec ladite troisième phase V3 de source de tension sinusoïdale triphasée équilibrée 55.

En considérant à nouveau la figure 10, on peut par exemple calculer le second signal d'amplitude Vs2 par la valeur moyenne de la tension Ve prise pendant l'alternance positive de la tension V3 de troisième phase. Dans l'exemple illustré sur la figure, la tension de sortie Ve est en opposition de phase avec la tension V3.

Ainsi, le premier signal d'amplitude Vs1 constitue un signal image de la composante de déplacement instantané du centre de gravité du rotor 1 selon la direction radiale fixe du premier capteur 51 dans le stator 2, tandis que le second signal d'amplitude Vs2 est l'image de la composante de déplacement instantané du centre de gravité du rotor 1 selon la direction radiale fixe du troisième capteur 53 dans le stator 2.

En se référant à nouveau à la figure 9, des moyens de traitement numériques 120 reçoivent les deux signaux d'amplitude Vs1 et Vs2, et produisent les signaux de commande d'alimentation des électroaimants de sustentation visant au maintien centré de l'axe de gravité du rotor 1 par rapport à l'axe de rotation moyen I-I dans le stator 2.

En se référant à nouveau à la figure 1, on voit que le palier magnétique 3 est décalé axialement par rapport au détecteur de position radiale 5. Dans ce cas, la position angulaire des capteurs inductifs constituant le détecteur de position radiale 5 peut être indifférente par rapport à la position angulaire des aimants constituant le palier magnétique 3.

Toutefois, de façon avantageuse, on peut prévoir que le palier magnétique 3 comporte trois électroaimants de sustentation, et que les trois capteurs inductifs formant le détecteur de position radiale 5 sont décalés angulairement entre les positions angulaires occupées par les électroaimants de sustentation du palier magnétique 3.

Dans ce dernier cas, on comprendra que les trois capteurs inductifs peuvent avantageusement être engagés entre les trois électroaimants de sustentation, de sorte que l'ensemble peut occuper un espace réduit selon la longueur du rotor, le détecteur de position radiale 5 étant alors imbriqué dans le palier magnétique 3.

Dans la réalisation illustrée sur cette même figure 1, l'ensemble rotatif selon l'invention est une pompe à vide, dans laquelle on reconnaît une entrée axiale d'aspiration 9, des ailettes 10 d'aspiration du rotor 1, et une sortie radiale de refoulement 11. Le rotor 1 tourne à grande vitesse, et est maintenu par les paliers magnétiques 3 et 4 dans le stator 2.

La présente invention n'est pas limitée aux modes de réalisation qui ont été explicitement décrits, mais elle en inclut les diverses variantes et généralisations qui sont à la portée de l'homme du métier sans s'écarter de la formulation des revendications.

## Revendications

1. Ensemble rotatif, comprenant un rotor (1) monté en rotation dans un stator (2) autour d'un axe de rotation moyen (I-I), et comprenant un détecteur de position radiale (5) du rotor (1) dans le stator (2) comportant trois capteurs répartis dans le stator (2) sensiblement à 120° les uns des autres autour du rotor (1) et à égale distance de l'axe de rotation moyen (I-I), **caractérisé en ce que** :
- les capteurs (51, 52, 53) sont des capteurs inductifs placés en regard d'un tronçon (100) de rotor en matériau magnétique,
- une source de tension sinusoïdale triphasée équilibrée (55) à point neutre (56) alimente les capteurs inductifs (51, 52, 53) câblés en étoile,
- des moyens permettent de capter la tension de sortie (Ve) entre le point neutre (56) de la source de tension triphasée équilibrée (55) et le point de connexion (54) commun des capteurs inductifs (51, 52, 53) câblés en étoile, et d'en déduire la position radiale du rotor (1) dans le stator (2).

2. Ensemble rotatif selon la revendication 1, **caractérisé en ce qu'**il comprend au moins un palier magnétique (3, 4) dont les électroaimants de sustentation sont alimentés par un circuit de commande piloté par la tension de sortie (Ve) du détecteur de position radiale (5, 6) correspondant.

3. Ensemble rotatif selon la revendication 2, **caractérisé en ce que** le palier magnétique (3, 4) comprend trois électroaimants de sustentation.

4. Ensemble rotatif selon la revendication 3, **caractérisé en ce que** les capteurs inductifs (51, 52, 53) sont décalés angulairement entre les positions angulaires occupées par les électroaimants de sustentation.

5. Ensemble rotatif selon la revendication 4, **caractérisé en ce que** les capteurs inductifs (51, 52, 53) sont engagés entre les électroaimants de sustentation d'un même palier magnétique (3).

6. Ensemble rotatif selon l'une quelconque des revendications 2 à 5, **caractérisé en ce qu'**il comprend deux paliers magnétiques (3, 4) espacés longitudinalement l'un de l'autre.

7. Ensemble rotatif selon l'une quelconque des revendications 2 à 6, **caractérisé en ce que** la tension de sortie (Ve) est traitée par des moyens de traitement de signal (7, 8) pour produire un signal d'amplitude (Vs) et un signal de phase (Vt) par rapport à la tension (V1, V2, V3) délivrée par la source de tension triphasée équilibrée (55), le signal d'amplitude (Vs) constituant un signal image de l'amplitude de déplacement radial de l'axe de gravité du rotor (1) par rapport à l'axe de rotation moyen (I-I), le signal de phase (Vt) constituant un signal image de la position angulaire de l'axe de gravité du rotor (1) autour de l'axe de rotation moyen (I-I) par rapport aux capteurs inductifs (51, 52, 53).

8. Ensemble rotatif selon la revendication 7, **caractérisé en ce que** les moyens de traitement de signal comprennent :
- un circuit de mesure d'amplitude (7), connecté à la sortie (54, 56) du détecteur de position radiale (5) et produisant un signal d'amplitude (Vs) proportionnel à l'amplitude de la tension de sortie (Ve) du détecteur de position radiale (5),
- un circuit de mesure de phase (8), connecté à la sortie (54, 56) du détecteur de position radiale (5), et produisant un signal de phase (Vt) proportionnel au déphasage (t) entre la tension de sortie (Ve) et l'une des trois tensions sinusoïdales (V1) alimentant les capteurs inductifs (51, 52, 53) en étoile,
- des moyens de traitement numérique (12), recevant le signal d'amplitude (Vs) et le signal de phase (Vt), et produisant les signaux de commande d'alimentation des électroaimants de sustentation visant au maintien centré de l'axe de gravité du rotor (1) par rapport à l'axe de rotation moyen (I-I) dans le stator (2).

9. Ensemble rotatif selon l'une quelconque des revendications 2 à 6, **caractérisé en ce que** la tension de sortie (Ve) est traitée par des moyens de traitement de signal (17, 18) produisant au moins deux signaux d'amplitude (Vs1, Vs2) constituant respectivement les images des composantes de déplacement instantané du centre de gravité du rotor (1) selon deux directions radiales fixes distinctes du stator (2) autour de l'axe de rotation moyen (I-I).

10. Ensemble rotatif selon la revendication 9, **caractérisé en ce que** les moyens de traitement de signal comprennent :
- un premier circuit de mesure d'amplitude (17) dont une première entrée est connectée à la sortie (54, 56) du détecteur de position radiale (5) et dont une seconde entrée (171) est connectée à une première phase (V1) de la source de tension sinusoïdale triphasée équilibrée (55), et produisant sur sa sortie (170) un premier signal d'amplitude (Vs1) proportionnel à la valeur moyenne de la tension de sortie (Ve) calculée pendant un échantillon synchrone avec ladite première phase (V1) de source de tension sinusoïdale triphasée équilibrée (55),
- un second circuit de mesure d'amplitude (18) dont une première entrée est connectée à la sortie (54, 56) du détecteur de position radiale (5) et dont une seconde entrée (181) est connectée à une autre phase (V3) de la source de tension sinusoïdale triphasée équilibrée (55), et produisant sur sa sortie (180) un second signal d'amplitude (Vs2) proportionnel à la valeur moyenne de la tension de sortie (Ve) calculée pendant un échantillon synchrone avec ladite autre phase (V3) de source de tension sinusoïdale triphasée équilibrée (55),
- des moyens de traitement numérique (120) recevant les deux signaux d'amplitude (Vs1, Vs2) et produisant les signaux de commande d'alimentation des électroaimants de sustentation visant au maintien centré de l'axe de gravité du rotor (1) par rapport à l'axe de rotation moyen (I-I) dans le stator (2).

11. Ensemble rotatif selon l'une quelconque des revendications 1 à 10, dans lequel le rotor (1) et le stator (2) constituent une pompe à vide.

12. Ensemble rotatif selon l'une quelconque des revendications 1 à 11, **caractérisé en ce que** la fréquence (F) de la source de tension sinusoïdale triphasée équilibrée (55) est très supérieure à la fréquence de rotation du rotor (1) dans le stator (2).

## Claims

1. A rotary assembly comprising a rotor (1) mounted to rotate in a stator (2) about a mean axis of rotation (I-I), the assembly further comprising a detector for detecting the radial position (5) of the rotor (1) within the stator (2), itself comprising three sensors distributed in the stator (2) at substantially 120° from one another about the rotor (1) and at equal distances from the mean axis of rotation (I-I), the assembly being **characterized in that**:
· the sensors (51, 52, 53) are inductive sensors placed facing a segment (100) of the rotor that is made of magnetic material;
· a balanced three-phase sinusoidal voltage source (55) having a neutral point (56) feeds the inductive sensors (51, 52, 53) which are wired in a star configuration; and
· means sense the output voltage (Ve) between the neutral point (56) of the balanced three-phase voltage source (55) and the connection point (54) common to the star-connected inductive sensors (51, 52, 53), and deduce therefrom the radial position of the rotor (1) within the stator (2).

2. A rotary assembly according to claim 1, **characterized in that** it comprises at least one magnetic bearing (3, 4) having supporting electromagnets fed by a control circuit driven by the output voltage (Ve) of the corresponding radial position detector (5, 6).

3. A rotary assembly according to claim 2, **characterized in that** the magnetic bearing (3, 4) comprises three supporting electromagnets.

4. A rotary assembly according to claim 3, **characterized in that** the inductive sensors (51, 52, 53) are angularly offset between the angular positions occupied by the supporting electromagnets.

5. A rotary assembly according to claim 4, **characterized in that** the inductive sensors (51, 52, 53) are engaged between the supporting electromagnets of a single magnetic bearing (3).

6. A rotary assembly according to any one of claims 2 to 5, **characterized in that** it comprises two magnetic bearings (3, 4) spaced apart longitudinally from each other.

7. A rotary assembly according to any one of claims 2 to 6, **characterized in that** the output voltage (Ve) is processed by signal processing means (7, 8) to produce an amplitude signal (Vs) and a phase signal (Vt) relative to the voltage (V1, V2, V3) delivered by the balanced three-phase voltage source (55), the amplitude signal (Vs) constituting a signal that is an image of the amplitude of the radial displacement of the centroidal axis of the rotor (1) relative to the mean axis of rotation (I-I), and the phase signal (Vt) constituting a signal that is the image of the angular position of the centroidal axis of the rotor (1) about the mean axis of rotation (I-I) relative to the inductive sensors (51, 52, 53).

8. A rotary assembly according to claim 7, **characterized in that** the signal processing means comprise:
· an amplitude-measuring circuit (7) connected to the output (54, 56) of the radial position detector (5) and producing an amplitude signal (Vs) proportional to the amplitude of the output voltage (Ve) of the radial amplitude detector (5);
· a phase-measuring circuit (8) connected to the output (54, 56) of the radial position detector (5), and producing a phase signal (Vt) proportional to the phase offset (t) between the output voltage (Ve) and one of the three sinewave voltages (V1) feeding the star-connected inductive sensors (51, 52, 53); and
· digital processing means (12) receiving the amplitude signal (Vs) and the phase signal (Vt) and producing the signals for controlling the feed to the supporting electromagnets seeking to keep the centroidal axis of the rotor (1) centered relative to the mean axis of rotation (I-I) in the stator (2).

9. A rotary assembly according to any one of claims 2 to 6, **characterized in that** the output voltage (Ve) is processed by signal processing means (17, 18) producing at least two amplitude signals (Vs1, Vs2) constituting images of respective instantaneous displacement components of the center of gravity of the rotor (1) along two different fixed radial directions of the stator (2) about the mean axis of rotation (I-I).

10. A rotary assembly according to claim 9, **characterized in that** the signal processing comprise:
· a first amplitude-measuring circuit (17) having a first input connected to the output (54, 56) of the radial position detector (5) and having a second input (171) connected to a first phase (V1) of the balanced three-phase sinusoidal voltage source (55), and producing on an output (170) a first amplitude signal (Vs1) proportional to the mean value of the output voltage (Ve) as computed over a sample that is synchronous with said first phase (V1) of the balanced three-phase sinusoidal voltage source (55);
· a second amplitude-measuring circuit (18) having a first input connected to the output (54, 56) of the radial position detector (5) and having a second input (181) connected to another phase (V3) of the balanced three-phase sinusoidal voltage source (55), and producing on an output (180) a second amplitude signal (Vs2) proportional to the mean value of the output voltage (Ve) computed during a sample that is synchronous with said other phase (V3) of the balanced three-phase sinusoidal voltage source (55); and
· digital processing means (120) receiving the two amplitude signals (Vs1, Vs2) and producing signals for controlling the feed to the supporting electromagnets seeking to keep the centroidal axis of the rotor (1) centered relative to the mean axis of rotation (I-I) within the stator (2).

11. A rotary assembly according to any one of claims 1 to 10, in which the rotor (1) and the stator (2) constitute a vacuum pump.

12. A rotary assembly according to any one of claims 1 to 11, **characterized in that** the frequency (F) of the balanced three-phase sinusoidal voltage source (55) is much higher than the rotary frequency of the rotor (1) in the stator (2).

## Patentansprüche

1. Rotierendes System, umfassend einen Rotor (1), der in einem Stator (2) um eine Rotationsmittelachse (I-I) drehend gelagert ist, und umfassend einen Radiallagegeber (5) des Rotors (1) im Stator (2), umfassend drei Sensoren, die im Stator (2) im Wesentlichen in einem Winkel von 120° zueinander um den Rotor (1) und im gleichen Abstand von der Rotationsmittelachse (I-I) angeordnet sind, **dadurch gekennzeichnet, dass**
- die Sensoren (51, 52, 53) induktive Sensoren sind, die gegenüber einem Rotorabschnitt (100) aus einem magnetischen Werkstoff angeordnet sind;
- eine symmetrische Dreiphasen-Sinusspannungsquelle (55) mit Sternpunkt (56) die zu einer Sternschaltung verkabelten induktiven Sensoren (51, 52, 53) speist;
- Mittel ermöglichen, die Ausgangsspannung (Ve) zwischen dem Sternpunkt (56) der symmetrischen Dreiphasenspannungsquelle (55) und dem gemeinsamen Anschlusspunkt (54) der zu einer Sternschaltung verkabelten induktiven Sensoren (51, 52, 53) zu erfassen und daraus die Radiallage des Rotors (1) im Stator (2) abzuleiten.

2. Rotierendes System nach Anspruch 1, **dadurch gekennzeichnet, dass** es mindestens ein Magnetlager (3, 4) umfasst, dessen Elektro-Schwebemagnete von einem Steuerkreis gespeist werden, der über die Ausgangsspannung (Ve) des entsprechenden Radiallagegebers (5, 6) gesteuert wird.

3. Rotierendes System nach Anspruch 2, **dadurch gekennzeichnet, dass** das Magnetlager (3, 4) drei Elektro-Schwebemagnete umfasst.

4. Rotierendes System nach Anspruch 3, **dadurch gekennzeichnet, dass** die die induktiven Sensoren (51, 52, 53) in ihrem Winkel zwischen den von den Elektro-Schwebemagneten belegten Winkelpositionen versetzt angeordnet sind.

5. Rotierendes System nach Anspruch 4, **dadurch gekennzeichnet, dass** die induktiven Sensoren (51, 52, 53) zwischen den Elektro-Schwebemagneten desselben Magnetlagers (3) eingefügt werden.

6. Rotierendes System nach einem beliebigen der Ansprüche 2 bis 5, **dadurch gekennzeichnet, dass** es zwei Magnetlager (3, 4) umfasst, die in Längsrichtung zwischen sich einen Zwischenraum aufweisen.

7. Rotierendes System nach einem beliebigen der Ansprüche 2 bis 6, **dadurch gekennzeichnet, dass** die Ausgangsspannung (Ve) von Signalverarbeitungsmitteln (7, 8) verarbeitet, um ein Amplitudensignal (Vs) und ein Phasensignal (Vt) bezogen auf die von der symmetrischen Dreiphasenspannungsquelle (55) gelieferte Spannung (V1, V2, V3) zu erzeugen, wobei das Amplitudensignal (Vs) ein Signal darstellt, das die Amplitude der Radialverschiebung der Schwerpunktachse des Rotors (1) gegenüber der Rotationsmittelachse (I-I) abbildet, und wobei das Phasensignal (Vt) ein Signal darstellt, das die Winkelposition der Schwerpunktachse des Rotors (1) um die Rotationsmittelachse (I-I) bezogen auf die induktiven Sensoren (51, 52, 53) abbildet.

8. Rotierendes System nach Anspruch 7, **dadurch gekennzeichnet, dass** die Signalverarbeitungsmittel umfassen:
- einen Amplitudenmesskreis (7), der mit dem Ausgang (54, 56) des Radiallagegebers (5) verbunden ist und ein Amplitudensignal (Vs) erzeugt, das zur Amplitude der Ausgangsspannung (Ve) des Radiallagegebers (5) proportional ist;
- einen Phasenmesskreis (8), der mit dem Ausgang (54, 56) des Radiallagegebers (5) verbunden ist und der ein Phasensignal (Vt) erzeugt, das zur Phasenverschiebung (t) zwischen der Ausgangsspannung (Ve) und einer der drei Sinusspannungen (V1) proportional ist, die die in Sternschaltung angeordneten induktiven Sensoren (51, 52, 53) speisen;
- Mittel zur digitalen Verarbeitung (12), die das Amplitudensignal (Vs) und das Phasensignal (Vt) empfangen und die die Steuersignale für die Speisung der Elektro-Schwebemagnete erzeugen, die darauf abzielen, die Schwerpunktachse des Rotors (1) bezogen auf die Rotationsmittelachse (I-I) im Stator (2) zentriert zu halten.

9. Rotierendes System nach einem beliebigen der Ansprüche 2 bis 6, **dadurch gekennzeichnet, dass** die Ausgangsspannung (Ve) von Signalverarbeitungsmitteln (17, 18) verarbeitet wird, die mindestens zwei Amplitudensignale Vs1, Vs2) erzeugen, welche jeweils das Abbild der Momentanverschiebungskomponenten des Schwerpunkt des Rotors (1) in zwei unterschiedlichen festen Radialrichtungen des Stators (2) um die Rotationsmittelachse (I-I) darstellen.

10. Rotierendes System nach Anspruch 9, **dadurch gekennzeichnet, dass** die Signalverarbeitungsmittel umfassen:
- einen ersten Amplitudenmesskreis (17), von dem ein erster Eingang mit dem Ausgang (54, 56) des Radiallagegebers (5) verbunden ist und von dem ein zweiter Eingang (171) mit einer ersten Phase (V1) der symmetrischen Dreiphasen-Sinusspannungsquelle (55) verbunden ist und der an seinem Ausgang (170) ein erstes Amplitudensignal (Vs1) erzeugt, das zum Mittelwert der Ausgangsspannung (Ve) proportional ist, der während eines Abtastwertes berechnet wird, der mit dieser ersten Phase (V1) der symmetrischen Dreiphasen-Sinusspannungsquelle (55) synchron ist;
- einen zweiten Amplitudenmesskreis (18), von dem ein erster Eingang mit dem Ausgang (54, 56) des Radiallagegebers (5) verbunden ist und von dem ein zweiter Eingang (181) mit einer anderen Phase (V3) der symmetrischen Dreiphasen-Sinusspannungsquelle (55) verbunden ist und der an seinem Ausgang (180) ein zweites Amplitudensignal (Vs2) erzeugt, das zum Mittelwert der Ausgangsspannung (Ve) proportional ist, der während eines Abtastwertes berechnet wird, der mit dieser anderen Phase (V3) der symmetrischen Dreiphasen-Sinusspannungsquelle (55) synchron ist;
- Mittel zur digitalen Verarbeitung (120), die die beiden Amplitudensignale (Vs1, Vs2) empfangen und die die Steuersignale für die Speisung der Elektro-Schwebemagnete erzeugen, die darauf abzielen, die Schwerpunktachse des Rotors (1) bezogen auf die Rotationsmittelachse (I-I) im Stator (2) zentriert zu halten.

11. Rotierendes System nach einem beliebigen der Ansprüche 1 bis 10, in dem der Rotor (1) und der Stator (2) eine Vakuumpumpe bilden.

12. Rotierendes System nach einem beliebigen der Ansprüche 1 bis 11, **dadurch gekennzeichnet, dass** die Frequenz (F) der symmetrischen Dreiphasen-Sinusspannungsquelle (55) sehr viel höher ist als die Rotationsfrequenz des Rotors (1) im Stator (2).
